Europäisches Patentamt

European Patent Office

Office européen des brevets

(19)

(11) Veröffentlichungsnummer : **0 346 730 B1**

(12) **EUROPÄISCHE PATENTSCHRIFT**

(45) Veröffentlichungstag der Patentschrift :
**19.08.92 Patentblatt 92/34**

(51) Int. Cl.$^5$ : **F04D 13/06,** F04D 13/08,
F04D 13/10

(21) Anmeldenummer : **89110203.0**

(22) Anmeldetag : **06.06.89**

(54) **Tauchpumpenaggregat.**

(30) Priorität : **11.06.88 DE 3820003**

(43) Veröffentlichungstag der Anmeldung :
**20.12.89 Patentblatt 89/51**

(45) Bekanntmachung des Hinweises auf die
Patenterteilung :
**19.08.92 Patentblatt 92/34**

(84) Benannte Vertragsstaaten :
**FR GB IT**

(56) Entgegenhaltungen :
**DE-C- 942 338
US-A- 2 355 472
US-A- 3 267 868
PATENT ABSTRACTS OF JAPAN, Band 8, Nr.
182 (M-319)[1619], 22. August 1984**

(73) Patentinhaber : **GRUNDFOS INTERNATIONAL
A/S
7-11, Poul Due Jensensvej
DK-8850 Bjerringbro (DK)**

(72) Erfinder : **Jensen, Niels Due
Pilevej 11
WK-8850 Bjerringbro (DE)**
Erfinder : **Mikkelstrup, Poul Erik
Husbondvej 24 Tange
DK-8850 Bjerringbro (DK)**

(74) Vertreter : **Wilcken, Hugo, Dr.
Patentanwälte Dr. Hugo Wilcken Dipl.-Ing.
Thomas Wilcken Musterbahn 1
W-2400 Lübeck (DE)**

## Beschreibung

Die Erfindung betrifft ein Tauchpumpenaggregat gemäß dem Oberbegriff des Anspruches 1.

Tauchpumpenaggregate sind Maschinensätze, die zeitweise oder ständig in einer zu fördernden Flüssigkeit liegen. Beim Einbau in Bohrbrunnen und bei der Förderung von Wasser werden sie auch Unterwassermotorpumpen genannt. Auf dem letztgenannten Gebiet ist der Einsatz der vorliegenden Erfindung besonders vorteilhaft.

Da die Kosten eines Brunnens mit dem Bohrungsdurchmesser steigen, ist es erstrebenswert, Pumpenaggregate mit kleinen Außendurchmessern und mit hoher Drehzahl zu bauen, um dieselbe Pumpleistung zu erzielen wie bei einer Pumpe mit niedrigerer Drehzahl, aber größerem Außendurchmesser.

Dies hat natürlich eine höhere Belastung für den Pumpenmotor zur Folge, woraus sich Probleme hinsichtlich des Abführens der im Pumpenmotor entstehenden Stromwärmeverluste ergeben.

Für die angesprochene Erhöhung der Drehzahl des Pumpenmotors werden häufig Frequenzumrichter mit einer Leistungselektronik verwendet. Wenn ein solcher Frequenzumrichter ein integrierter Bestandteil des Pumpenmotors ist, resultiert daraus das weitere Problem, daß auch die Wärmeverluste der genannten Leistungselektronik des Frequenzumrichters abgeführt werden müssen.

Der Erfindung liegt nun die Aufgabe zugrunde, ein Tauchpumpenaggregat der eingangs genannten Art so weiter zu bilden, daß der Abtransport der in Betrieb entstehenden Verlustwärme verbessert wird und damit die Temperatur in der Leistungselektronik und in den Wicklungen des Unterwassermotors zu senken.

Die Aufgabe wird gelöst durch ein Tauchpumpenaggregat mit den Merkmalen des Anspruches 1.

Bei der in Anspruch 1 angegebenen Weise wirkt der in den Pumpenkörper hineinragende Wellenteil als eine rotierende Wärmeaustauschfläche mit extrem großem Wärmeübergang bei der erzwungenen Konvektion. Zur Erhöhung des durch die Welle fließenden Volumenstromes kann am Eintritt des Fluids in die Hohlwelle eine Förderschnecke eingesetzt sein.

Die Förderschnecke kann als eine in die Welle eingesetzte Drahtwendel ausgebildet sein. Um die Pumpwirkung dieser Drahtwendel noch zu erhöhen, kann sie einen Kern aufweisen. Dies hat zur Folge, daß die gesamte Motor- Kühlflüssigkeitsmenge erzwungenermaßen über die Drahtwendeln vom Eintritt des Fluids in die Hohlwelle zum pumpenseitigen Ende der Welle gefördert wird. Die Drahtwendel mit oder ohne Kern wird dann in der Hohlwelle durch nach außen wirkende Radialkräfte in Lage gehalten, welche aus einer Federkraft resultieren, die ihrerseits von einem vor dem Einführen in die Hohlwelle verursachten Ziehen der Wendel in axialer Richtung herrührt.

Besonders vorteilhaft ist eine Ausführungsform, bei der in die Welle ein Rohr eingeführt ist. Dabei ist die Welle an ihrem oberen pumpenseitigen Ende durch einen lösbaren Verschluß geschlossen. Zwischen dem Innenrohr und der Innenwandung der Welle wird mindestens ein radialer Zwischenraum gebildet, der am pumpenseitigen Ende offen und am motorseitigen Ende verschlossen ist. Dabei steht das pumpenferne Ende des Innenrohres, welches eine Einleitstelle für das Fluid bildet, mit dem Rotorraum in Verbindung. Darüber hinaus weist die Welle zumindest eine Rückführstelle für das Fluid in Form einer Durchbrechung auf, die mit einem pumpennahen Bereich des Rotorraumes in Verbindung steht.

Das Innenrohr ist vorteilhafterweise als ein Zylinderrohr mit beliebigem Querschnitt ausgebildet, wobei es jedoch mit mindestens drei Mantellinien seines äußeren Umfanges im Pumpenbereich an dem Inneren der Welle anliegt.

Vorteilhaft ist eine Ausbildung des inneren Rohres der Welle aus Kunststoff mit kleinen Wärmeleitzahlen, so daß dann ein hoher Wirkungsgrad des Wärmeabtransportes vom Fluid in die Wärmesenke des von der Pumpe geförderten Fluids gewährleistet ist.

Schließlich ist es von Vorteil, wenn die Welle im Pumpen bereich als Vieleckrohr ausgebildet ist, so daß die Laufräder der Pumpe durch Formschluß drehfest, aber axial beweglich mit ihr verbunden sind, wodurch eine weitere Kostenreduzierung erzielt wird.

Im gesamten Motorbereich ist die Welle vorzugsweise als zylindrisches Rohr mit kreisförmigem Querschnitt ausgebildet, so daß die Lagerung der Welle im Motorbereich auf einfache herkömmliche Weise vorgenommen werden kann.

Die auf der Welle befindlichen Laufräder vergrößern die Oberfläche der Welle, wodurch der Wärmewiderstand weiter verringert wird.

Im übrigen kann der Frequenzumrichter in den Motor integriert werden. Besonders vorteilhaft ist eine Anbringung des Frequenzumrichters am unteren Motorende, so daß die von der Leistungselektronik des Frequenzumrichters erzeugte Verlustwärme ebenfalls durch das von der Hohlwelle geförderte Fluid abführbar ist.

Die Erfindung wird anhand eines in den Zeichnungen dargestellten Ausführungsbeispieles näher erläutert. Hierbei zeigt:

Figur 1 das Pumpenaggregat gemäß der Erfindung im Schnitt,

Figur 2 einen Querschnitt entlang der Linie A-A in Figur 1, und

Figur 3 einen vergrößerten Querschnitt der Hohlwelle auf der Höhe der Linie B-B in Figur 1

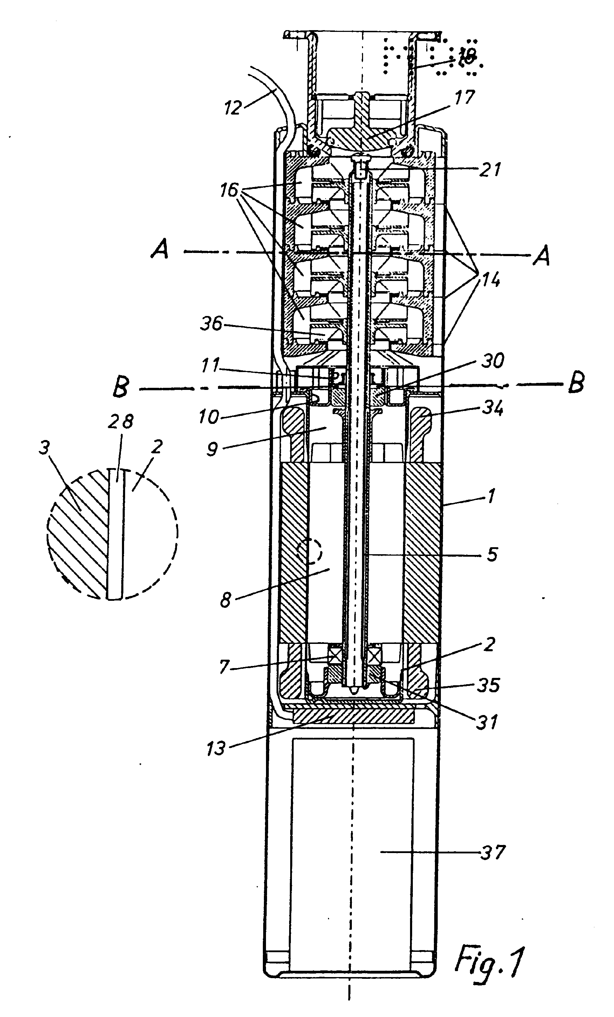

Das Tauchpumpenaggregat gemäß Fig.1 weist einen Walzmaterial gefertigten Mantel 1 auf.Im unteren Teil des Aggregates ist ein geschlossener Spaltrohrtopf 2,das von diesem aufgenommene Rotorblechpaket 8 sowie das ihn umgebende Statorblechpaket 3 mit den Wicklungsköpfen 34 und 35 dargestellt.

Die gemeinsame Welle 5 des Motors und des Pumpenteiles des Aggregates ist durch die Radiallager 30, 31 und durch das Drucklager 7 festgelegt. Die Welle 5 trägt das im Spaltrohrtopf 2 befindliche Rotorblechpaket 8.

Der Rotorraum 9 ist durch eine Wand 10 mit einer Dichtung 11 zur Umgebung hin abgeschlossen, so daß der Rotorraum vom zu fördernden Fluid getrennt ist.

Das Pumpenaggregat ist mittels eines Kabels 12 an das elektrische Versorgungsnetz anschließbar. Im Betrieb fließt der elektrische Strom über den Frequenzumrichter 13 in die Wicklungen 34, 35 des Motors.

Die Pumpe saugt Wasser über Schlitze 14 im Mantel 1 an. Der Pumpenkörper ist - wie Figur 2 zeigt - so ausgeformt ist, daß zwischen jeder Stufenkammer 16 und dem Mantel 1 Kanäle entstehen.

Das zu fördernde Wasser wird vom Laufrad 36 jeder Pumpenstufe, von denen in Figur 1 vier dargestellt sind, in die Stufenkammer 16 gedrückt und über die Rückführbeschaufelung dem Laufrad der nächsten Pumpenstufe zugeführt.

Das Wasser verläßt nach dem Durchfließen aller Pumpenstufen das Pumpenaggregat über das Rückschlagventil 17 durch den Druckstutzen 18.

Figur 2 zeigt einen Schnitt entlang der Linie A-A durch den Pumpenkörper gemäß Figur 1 des erfindungsgemäßen Pumpenaggregates.

Deutlich erkennbar ist der Mantel 1 mit den Saugschlitzen 14 und eine Stufenkammer 16.

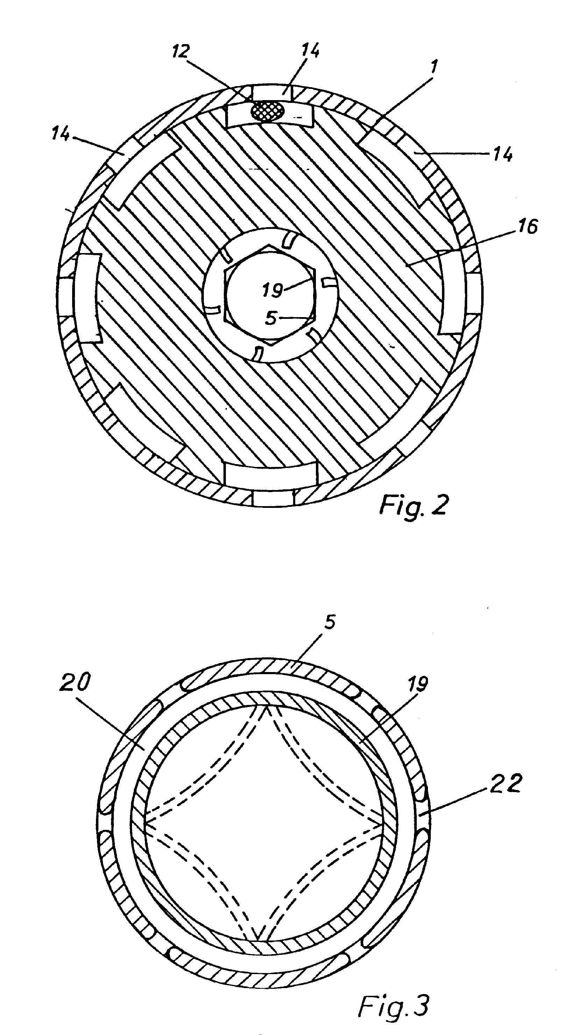

Figur 3 stellt eine vergrößerte Ansicht des Querschnittes durch die Welle 5 auf der Höhe der Linie B-B in Figur 1 dar. Im abgebildeten Beispiel weist die Welle 5 im Pumpenbereich einen sechseckigen Querschnitt auf.In die Welle 5 ist ein Kreisrohr 19 geschoben,welches mit seinem Außendurchmesser im Pumpenbereich an dem Inneren der Welle 5 anliegt.

Dadurch entstehen Kanäle 20 zwischen dem Äußeren des Kreisrohres 19 und dem Inneren der Welle 5. Diese Kanäle sind am unteren Ende der Welle 5, also am pumpenabseitigen Ende verschlossen, am anderen Ende hingegen offen. Am pumpenseitigen Ende der Welle 5 ist diese durch einen lösbaren Verschluß, in Figur 1 als Stopfen 21 dargestellt, verschlossen. Dies gestattet bei der Installation des Pumpenaggregates das Auffüllen des Motor-Kühlkreislaufes, der in keinem Austausch mit dem zu fördernden Wasser steht.

Zur Vergrößerung des Querschnittes der Kanäle 20 kann das Rohr 19 in Abweichung von der dargestellten Ausführungsform gemäß Figur 3 ein Zylinderrohr mit beliebigem Querschnitt sein, welches sich jedoch mit mindestens drei Mantellinien seines äußeren Umfanges an dem Inneren der Welle abstützt.Die Umrißlinien eines derartig ausgeformten Rohres 19 sind in Figur 3 gestrichelt eingezeichnet.

Bei einer Drehbewegung arbeitet die Welle 5 als Kreiselpumpe. Dabei saugt sie am motorseitigen Ende die Motor-Kühlflüssigkeit aus dem Rotorraum 9 an, welche dann nach Durchlaufen der Hohlwelle an derem oberen Ende in die Kanäle 20 eintritt. Durch auf dem größten Durchmesser der Welle 5 gebohrte Löcher 22 tritt die auf dem Weg durch das Pumpengehäuse abgekühlte Motor-Kühlflüssigkeit wieder in den Rotorraum 9 ein, und zwar in einer Höhe auf der Linie B in Figur 1, also in den von dem zu fördernden Wasser durch die Dichtung 11 abgedichteten Raum.

Von dem oberen Teil des Rotorraumes 9 fließt die Motor-Kühlflüssigkeit nun entlang dem Spaltrohrtopf 2 in den unteren Teil des Rotorraumes 9, wo sie wiederum durch die Saugwirkung der Hohlwelle in diese eingesaugt und durch deren Inneren nach oben gepumpt wird. Der Kanal 28 für die Kühlflüssigkeit entlang des Spaltrohrtopfes 2 ist in dem vergrößerten Ausschnitt in Figur 1 dargestellt.

Die Motor-Kühlflüssigkeit nimmt in dem Rotorraum 9 die Verlustwärme des Motors und des Frequenzumrichters 13 auf. Mit dem Bezugszeichen 37 ist im übrigen ein zu dem Frequenzumrichter 13 gehöriger Kondensator bezeichnet.

Selbstverständlich ist das erfindungsgemäße Tauchpumpenaggregat auch mit einem Frequenzumrichter im stromgespeicherten Betrieb denkbar; in diesem Falle würde der Kondensator 37 ersetzt werden durch eine Induktivität.

Im übrigen kann zur Erhöhung des Förderstromes der Motor-Kühlflüssigkeit am unteren Ende der Welle 5 eine Schnecke in das Kreisrohr 19 eingeschoben werden (nicht dargestellt). Diese kann als eine in die Welle 5 eingesetzte Drahtwendel ausgebildet sein. Zur Erhöhung der Pumpwirkung dieser Drahtwendel kann diese mit einen als Stopfen wirkenden Kern versehen sein. Dadurch wird die gesamte Motor-Kühlflüssigkeit erzwungenermaßen über die Drahtwendeln zum pumpenseitigen Ende der Welle 5 gefördert.

Die in das Welleninnere gesetzte, als Förderschnecke dienende Drahtwendel wird durch Federkraft erzeugte, nach außen gerichtete Radialkräfte in Lage gehalten.

**Patentansprüche**

1. Tauchpumpenaggregat mit einer Pumpe und einem die Pumpe antreibenden Naßläufer-Motor und mit einer gemeinsamen Welle für den Motor und die Pumpe, dadurch gekennzeichnet, daß das im Rotorraum (9) des Motors befindliche Fluid in die hohl ausgebildete Welle (5) einleitbar und in der Welle bis in das Pumpengehäuse förderbar ist, um es dort über die Wandung der Welle (5) in Wärmeaustausch mit dem Fördermedium zu bringen, daß das Fluid aus der Welle (5) unter Pumpwirkung in den Rotorraum (9) rückführbar ist und daß die Einleit- und Rückführstellen im Rotorraum axial zueinander versetzt angeordnet sind.

2. Tauchpumpenaggregat nach Anspruch 1, dadurch gekennzeichnet, daß die erwähnte Pumpwirkung von der Welle (5) als solcher erzeugbar ist.

3. Tauchpumpenaggregat nach Anspruch 2, dadurch gekennzeichnet, daß die Welle (5) in ihrem Inneren mit einer Förderschnecke versehen ist.

4. Tauchpumpenaggregat nach Anspruch 3, dadurch gekennzeichnet, daß die Förderschnecke als eine in die Welle (5) eingesetzte Drahtwendel ausgebildet ist.

5. Tauchpumpenaggregat nach Anspruch 3, dadurch gekennzeichnet, daß die Förderschnecke als eine in die Welle (5) eingesetzte Drahtwendel mit innenliegendem Kern ausgebildet ist.

6. Tauchpumpenaggregat nach einem der Ansprüche 1 bis 5, dadurch gekennzeichnet, daß in die Welle (5) ein Rohr (19) eingeführt ist, daß die Welle (5) an ihrem oberen, im Pumpengehäuse befindlichen Ende durch einen lösbaren Verschluß (21) geschlossen ist, daß mindestens ein radial zwischen der Welle (5) und dem Rohr (19) gebildeter Zwischenraum (20) am oberen, ebenfalls im Pumpengehäuse befindlichen Ende offen und am unteren im Rotorraum (9) befindlichen Ende verschlossen ist, daß das pumpenferne, eine Einleitstelle für das Fluid bildende untere Ende des Rohres (19) mit dem Rotorraum (9) in Verbindung steht und daß die Welle (5) zumindest eine Rückführstelle für das Fluid bildende Durchbrechung (22) aufweist, die mit einem pumpennahen Bereich des Rotorraumes (9) in Verbindung steht.

7. Tauchpumpenaggregat nach einem der Ansprüche 1 bis 6, dadurch gekennzeichnet, daß jede Durchbrechung (22) in einen Raum mündet, der das pumpenseitige, die Welle (5) lagernde Radiallager (30) im Rotorraum (9) umgibt und mit dem Rotorraum (9) in Verbindung steht und im übrigen geschlossen ausgebildet ist.

8. Tauchpumpenaggregat nach einem der Ansprüche 1 bis 7, dadurch gekennzeichnet, daß die Welle (5) und das koaxial in die Welle (5) eingeführte Rohr (19) als Zylinderrohr mit beliebigem Querschnitt ausgebildet ist, welches im Pumpenbereich mit mindestens drei Mantellinien seines äußeren Umfanges an dem Inneren der Welle (5) anliegt.

9. Tauchpumpenaggregat nach einem der Ansprüche 6 bis 8, dadurch gekennzeichnet, daß das in die Welle (5) eingeführte Rohr (19) aus Kunststoff besteht.

10. Tauchpumpenaggregat nach Anspruch 8 oder 9, dadurch gekennzeichnet, daß die Welle (5) im Motorbereich als zylindrisches Rohr mit kreisförmigem Querschnitt und im Pumpenbereich als Vieleckrohr ausgebildet ist.

11. Tauchpumpenaggregat nach einem der Ansprüche 1 bis 10, dadurch gekennzeichnet, daß die Drehzahl des Aggregates durch einen Frequenzumwandler (13) einstellbar ist, der integrierter Bestandteil des Aggregates ist.

**Claims**

1. An immersion pump unit with a pump and with a wet runner motor driving the pump, and with a common shaft for the motor and the pump, characterised in that the fluid situated in the rotor chamber (9) of the motor is able to be introduced into the shaft (5), which is of hollow construction, and is able to be conveyed in the shaft up into the pump housing, in order to bring it there, via the wall of the shaft (5) in thermal exchange with the flow medium, that the fluid is able to be returned out of the shaft (5), under pumpage, into the rotor chamber (9) and that the introduction- and return points in the rotor chamber are arranged so as to be staggered axially with respect to each other.

2. An immersion pump unit according to Claim 1, characterised in that the above-mentioned pumpage is able to be generated by the shaft (5) as such.

3. An immersion pump unit according to Claim 2, characterised in that the shaft (5) is provided in its interior with a worm conveyor.

4. An immersion pump unit according to Claim 3, characterised in that the worm conveyor is constructed as a wire spiral inserted into the shaft (5).

5. An immersion pump unit according to Claim 3, characterised in that the worm conveyor is constructed as a wire spiral, with an internal core, inserted into the shaft (5).

6. An immersion pump unit according to one of Claims 1 to 5, characterised in that a pipe (19) is inserted into the shaft (5), that the shaft (5) is closed at its upper end, situated in the pump housing, by a detachable closure (21), that at least one intermediate chamber (20), formed radially between the shaft (5) and the pipe (19), is open at the upper end, likewise situated in the pump housing and is closed at the lower end, situated in the rotor chamber (9), that the lower end of the pipe (19), at a distance from the pump and forming an introduction point for the fluid, communicates with the rotor chamber (9) and that the shaft (5) has at least one perforation (22), forming a return point for the fluid, which communicates with a region of the rotor chamber (9) close to the pump.

7. An immersion pump unit according to one of Claims 1 to 6, characterised in that each perforation (22) opens out into a chamber, which surrounds the radial bearing (30), on the pump side, supporting the shaft (5), in the rotor chamber (9) and which communicates with the rotor chamber (9) and, in addition, is constructed so as to be closed.

8. An immersion pump unit according to one of Claims 1 to 7, characterised in that the shaft (5) and the pipe (19), introduced coaxially into the shaft (5), is constructed as a cylindrical pipe with any desired cross-section, which rests in the pump region with at least three surface lines of its outer periphery against the interior of the shaft (5).

9. An immersion pump unit according to one of Claims 6 to 8, characterised in that the pipe (19) which is introduced into the shaft (5) consists of plastics.

10. An immersion pump unit according to Claim 8 or 9, characterised in that the shaft (5) in the motor region is constructed as a cylindrical pipe with circular cross-section and in the pump region is constructed as a polygonal pipe.

11. An immersion pump unit according to one of Claims 1 to 10, characterised in that the rotational speed of the unit is adjustable by means of a frequency converter (13), which is an integral component of the unit.

**Revendications**

1. Unité de pompe submersible, comportant une pompe et un moteur à rotor humide entraînant la pompe, et un arbre commun pour le moteur et la pompe, caractérisée en ce que le fluide situé dans l'enceinte (9) contenant le rotor du moteur peut être introduit dans l'arbre (5) qui est creux, et peut être entraîné à l'intérieur de l'arbre jusque dans le carter de pompe, pour être amené à échanger de la chaleur avec le milieu d'entrainement, par l'intermédiaire de la paroi de l'arbre (5), en ce que le fluide sortant de l'arbre (5) peut être renvoyé au moyen d'une action de pompage dans l'enceinte (9) contenant le rotor et en ce que les zones d'introduction et de renvoi sont disposées en étant décalées axialement l'une par rapport à l'autre dans l'enceinte contenant le rotor.

2. Unité de pompe submersible selon la revendication 1, caractérisée en ce que l'action de pompage mentionnée peut être produite en tant que telle par l'arbre (5).

3. Unité de pompe submersible selon la revendication 2, caractérisée en ce que l'arbre (5) comporte, en son intérieur, une vis transporteuse.

4. Unité de pompe submersible selon la revendication 3, caractérisée en ce que la vis transporteuse est réalisée sous la forme d'un fil hélicoïdal inséré dans l'arbre (5).

5. Unité de pompe submersible selon la revendication 3, caractérisée en ce que la vis transporteuse est réalisée sous la forme d'un fil hélicoïdal inséré dans l'arbre (5) et comportant un noyau interne.

6. Unité de pompe submersible selon l'une des revendications 1 à 5, caractérisée en ce qu'un tube (19) est introduit dans l'arbre (5), en ce que l'arbre (5) est fermé, à son extrémité supérieure située dans le carter de pompe, par un dispositif de fermeture amovible (21), en ce qu'au moins un espace intercalaire radial, formé entre l'arbre (5) et le tube (19), est ouvert à l'extrémité supérieure, également située dans le carter de pompe, et est fermé à l'extrémité inférieure, située dans l'enceinte (9) contenant le rotor, en ce que l'extrémité inférieure du tube (19), qui est éloignée de la pompe et forme une zone d'entrée pour le fluide, est reliée à l'enceinte (9) contenant le rotor, et en ce que l'arbre (5) comporte au moins une interruption (22) formant la zone de renvoi pour le fluide et qui est reliée à une zone, qui est proche de la pompe, de l'enceinte (9) contenant le rotor.

7. Unité de pompe submersible selon l'une des revendications 1 à 6, caractérisée en ce que chaque interruption (22) débouche dans un espace qui entoure le palier radial (30), qui est situé du côté de la pompe et supporte l'arbre (5), dans l'enceinte (9) contenant le rotor et est raccordé à l'enceinte (9) contenant le rotor et est par ailleurs fermé.

8. Unité de pompe submersible selon l'une des revendications 1 à 7, caractérisée en ce que l'arbre (5) et le tube (19), introduit coaxialement dans l'arbre (5), sont réalisés sous la forme d'un tube cylindrique possédant une section transversale quelconque, qui, au voisinage de la pompe, s'applique par au moins trois génératrices de sa périphérie extérieure, contre l'intérieur de l'arbre (5).

9. Unité de pompe submersible selon l'une des revendications 6 à 8, caractérisée en ce que le tube (19) introduit dans l'arbre (5) est réalisé en matière plastique.

10. Unité de pompe submersible selon la revendication 8 ou 9, caractérisée en ce que l'arbre (5) est agencé, au voisinage du moteur, sous la forme d'un tube cylindrique possédant une section transversale circulaire et, au voisinage de la pompe, sous la forme d'un tube polygonal.

11. Unité de pompe submersible selon l'une des revendications 1 à 10, caractérisée en ce que la vitesse de rotation de l'unité peut être réglée par un convertisseur de fréquence (13), qui fait partie intégrante de l'unité.

Fig.1

Fig. 2

Fig. 3